# EUROPEAN PATENT SPECIFICATION

(11) **EP 0 803 473 B1**
(45) Date of publication and mention of the grant of the patent: **17.03.2004**
(21) Application number: 96104934.3
(22) Date of filing: 28.03.1996
(51) Int. Cl.: C02F 1/42

(54) **Method and apparatus for treatment of water**
Verfahren und Vorrichtung zur Behandlung von Wasser
Méthode et appareil pour le traitement d'eau

(43) Date of publication of application: 29.10.1997
(73) Proprietor: M.J. Bauer, Inc., Granger, Indiana 46530 (US)
(72) Inventor: Bauer, Matthew J., Granger, Indiana 46530 (US)
(74) Representative: Coyle, Philip Aidan

(56) References cited:
- WO-A-94/13379
- GB-A- 1 010 924
- US-A- 3 538 942
- US-A- 4 104 165

## Description

### 1. Field of the invention.

The present invention relates to ion-exchange and filter water systems, and, more particularly, to an ion-exchange resin bed system.

### 2. Description of the related art.

Ion-exchange water treatment systems may be of two general types, i.e., a timed system and a demand system. A timed system utilizes a timer to regenerate a resin bed within a treatment tank of the water treatment system after a particular period of time has elapsed. With a timed system, it is necessary to estimate, based upon the users application demand, water usage history, etc., when the treatment tank should be regenerated. If actual water usage exceeds the capacity of the unit during the time period, "untreated" water (i.e., water containing impurities such as iron, calcium and magnesium) could be output by the water treatment system. Accordingly, timed water treatment systems are typically regenerated well ahead of the point when the total amount of normal water use would occur to prevent the occurrence of such "untreated" water. Such systems have the disadvantage of discharging excess water and regenerant, e.g., salt, into a sewer system, with associated detrimental environmental impact.

A demand system of conventional design utilizes a flow meter (or turbine) at the output valve of the treatment tank to count the actual amount of water used since the last regeneration. The flow meter outputs signals to an electronic counter which initiates regeneration when the pre-set count (corresponding to a total amount of flow through the treatment tank outlet) equals a preset amount corresponding to an exchange capacity of the resin bed within the treatment tank. However, such systems are limited by the sensitivity of the flow meter. Such meters are not typically able to count all the flow therethrough in a small amount per unit of time, such as caused by drips from sinks, appliances, etc. Also, such meters are unable to register if an overlap or overdrive occurred at extremely high flow rates. Such small amounts of water which actually pass through the flow meter (or turbine) but which are not detected thereby actually amount to several gallons per hour, or even more. Because conventional systems do not allow for such lost water, the system may experience oversaturation or overrun of capacity after a certain volume of water. That is, the system continues to operate after the resin bed is unable to perform additional ion exchange, resulting in untreated water being output from the water treatment system.

U.S. Patent No. 4,104,165 (Braswell), assigned to the assignee of the present invention, discloses a water softening system which may be regenerated on a timed basis. Braswell discloses a valve head assembly mounted to a treatment tank and having a poppet type plunger valve disposed therein. The plunger valve includes a venturi section which creates a vacuum within the valve head assembly and treatment tank to draw saturated brine solution through the treatment tank and into the valve head. A solenoid valve is disposed downstream of the plunger valve and is actuated to allow fluid flow through the plunger valve. All fluid which flows through the plunger valve also flows through the solenoid valve. A problem with such solenoid valves is that they typically have a relatively low flow rate, e.g., 5 gallons/minute maximum, which accordingly limits the regeneration time of the water treatment tank. Moreover, since all of the fluid flows through the solenoid valve when the solenoid valve is in an open position, debris and foreign matter within the fluid may lodge within the solenoid valve and cause improper functioning thereof.

It is also known in the art to use counter current and pulsating flow through a treatment tank to reduce the amount of time required to regenerate the resin bed and to more fully recharge the resin bed and to prevent channeling or fluidizing of the resin bed. For example, U.S. Patent No. 5,108,616 (Kunz) discloses an ion exchange water treatment system using a pulsed, counter current flow of regenerant through the treatment tank. The duration of the pulsations and the time period between pulsations is such that the ion exchange granules making up the resin bed within the treatment tank are not substantially mixed during the regenerating process.

An advantage of solenoid valves is that they may be quickly opened and closed to thereby decrease the amount of time required to regenerate a particular treatment tank.

what is needed in the art is a water treatment system which induces a flow of regenerant through the treatment tank and into the valve head assembly very quickly, using less water and time in comparison with conventional units.

A further need is a system which utilizes diaphragm valves to quickly direct water in a particular direction within the valve head, while eliminating problems of debris buildup within and low flow rate through such a diaphragm valve.

An additional need is a water treatment system which allows various time periods for certain segments of the regeneration process to be quickly and easily altered depending upon water conditions, water usage, high or low pressure, etc.

A still further need is a water treatment system which allows for lost or unaccounted for water that has gone through the system and thereby eliminates overlap conditions associated therewith and rebuilds the bed if an overlap condition occurs.

An additional need is a water treatment system which monitors exact water usage of one or more tanks within a water treatment system and regenerates each particular tank according to the exact amount of water used by that tank.

A further additional need is a water treatment system which utilizes a vacuum pressure within the valve head to create a relatively strong suction pressure within the treatment tank and thereby removes substantially all the gases therein, i.e., degassifies the interior of the treatment tank and draws the regenerate in an undiluted state.

### SUMMARY OF THE INVENTION

The present invention provides a valve head assembly which uses a fast acting valve to effect a flow of fluid through the valve head assembly, while at the same time having only a small portion of fluid flowing through the solenoid valve, relative to the total amount of fluid flowing through the valve head assembly.

The invention comprises, in one form thereof, a water treatment system including a treatment tank having an ion-exchange mineral or filtration bed therein, and a valve head assembly disposed on top of and in fluid communication with the treatment tank. The valve head assembly includes a passage for allowing a flow of fluid through the valve head assembly, a vacuum pressure creating device disposed within the passage, a drain disposed within the passage and at a downstream side of the vacuum pressure creating device, and a valve disposed within the passage and at a downstream side of the vacuum pressure creating device. The valve is movable to an open position and a closed position for allowing fluid flow through the vacuum pressure creating device, whereby a portion of fluid flows through the drain and a lesser remaining portion of fluid flows through the valve when the valve is in the open position.

An advantage of the present invention is that the valve head assembly induces a flow of brine through the treatment tank and into the valve head assembly very quickly, causing faster exchange with 100% regenerant in comparison with conventional units, thus saving water in the process.

A further advantage is that fast acting valves are used to quickly direct water in a particular direction within the valve head, while eliminating problems of debris buildup within and low flow rate through the valve.

An additional advantage is that various time periods corresponding to certain segments of the regeneration process can be quickly and easily altered depending upon water conditions, water usage, hardness etc.

A still further advantage is that lost water is allowed for, thereby eliminating overcapacity conditions associated therewith.

An additional advantage is that exact water usage of one or more tanks is monitored and each particular tank can be regenerated according to the exact amount of water used by that tank.

A further advantage is that a vacuum pressure within the valve head is used to create a relatively strong suction pressure within the treatment tank and thereby remove substantially all the gases therein, i.e., degassify the interior of the treatment tank.

### BRIEF DESCRIPTION OF THE DRAWINGS

The above-mentioned and other features and advantages of this invention, and the manner of attaining them, will become more apparent and the invention will be better understood by reference to the following description of an embodiments of the invention taken in conjunction with the accompanying drawings, wherein:
Fig. 1 is a schematic illustration of an embodiment of the present invention, showing fluid flow during an in-service mode;
Fig. 2 is a schematic illustration of the embodiment of Fig. 1; showing fluid flow during a brine draw mode;
Fig. 3 is a schematic illustration of the embodiment of Fig. 1, showing fluid flow during a pulsating rinse mode;
Fig. 4 is a schematic illustration of the embodiment of Fig. 1, showing fluid flow during a purge mode;
Fig. 5 is a schematic illustration of the embodiment of Fig. 1, showing fluid flow during a brine tank refill mode;
Fig. 6 is an enlarged view of the valve head assembly shown in Figs. 1-5;
Fig. 7 is an electrical schematic of an embodiment of the processor of the present invention;
Fig. 8 is a flow chart of the decisional steps carried out by an embodiment of a processor of the present invention; and
Fig. 9 is a layered, fragmentary top view of the valve head assembly shown in Fig. 6.

Corresponding reference characters indicate corresponding parts throughout the several views. The exemplification set out herein illustrates one preferred embodiment of the invention, in one form, and such exemplification is not to be construed as limiting the scope of the invention in any manner.

### DETAILED DESCRIPTION OF THE INVENTION

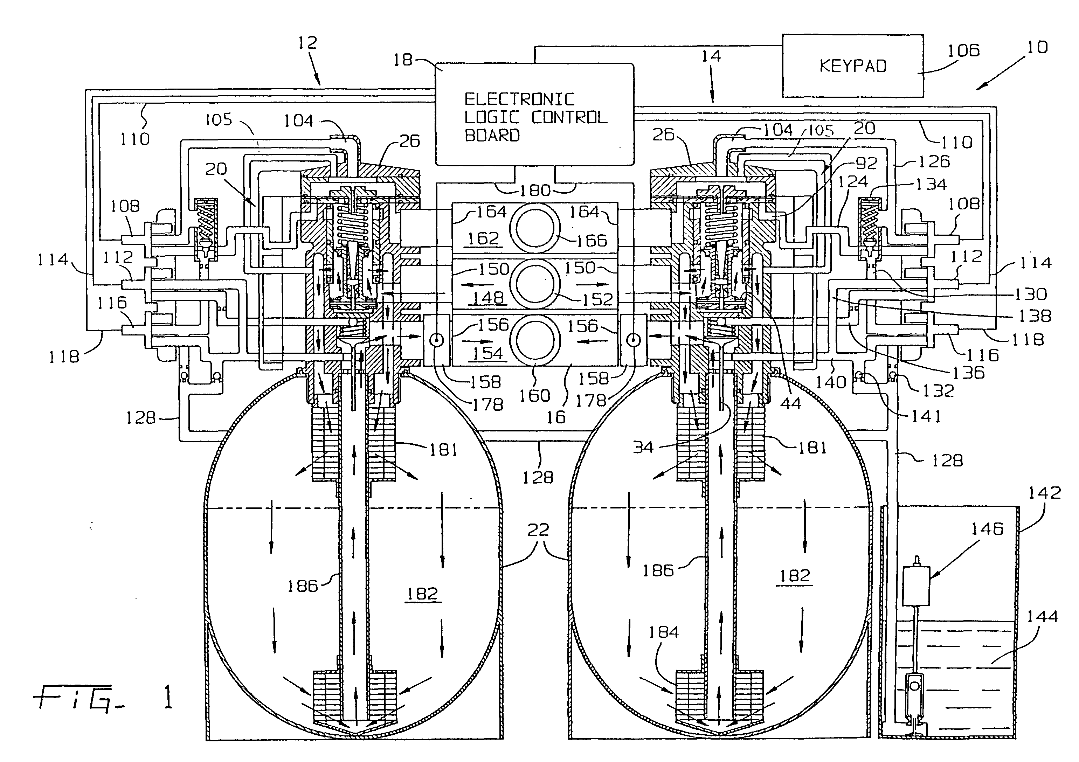

Referring now to the drawings and more particularly to Figs. 1-5, there is shown a water treatment system 10 of the present invention, including treatment tank assemblies 12, 14, manifold 16 and processor or electronic logic control board 18.

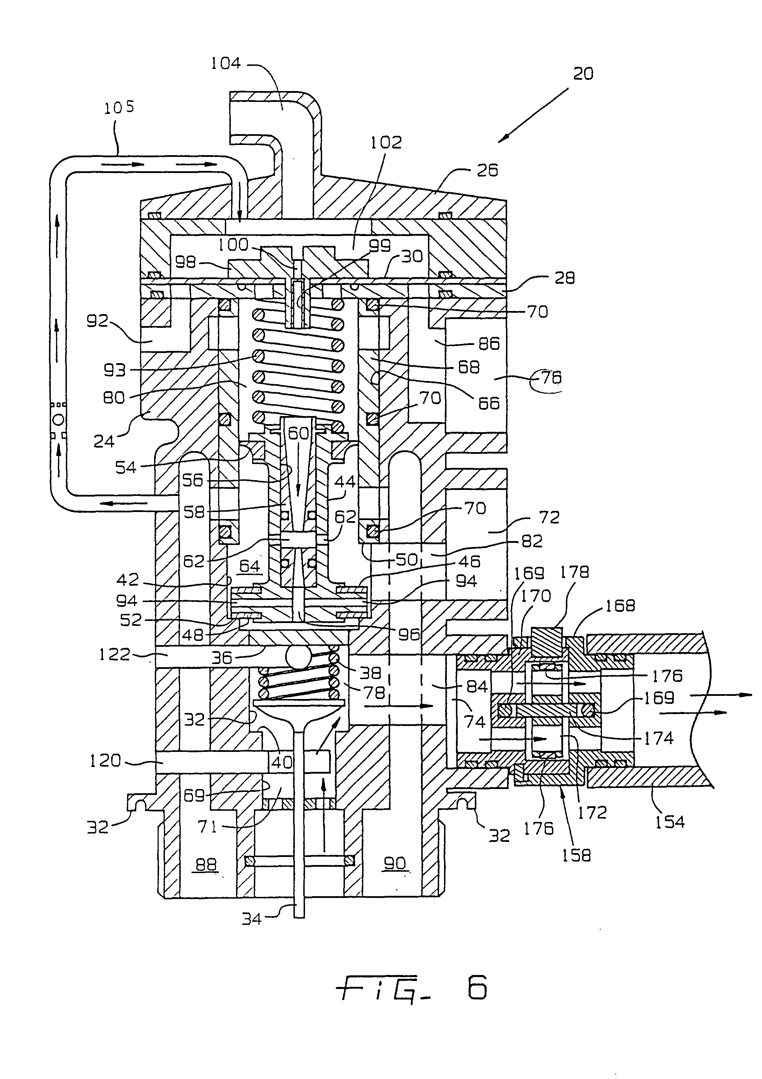

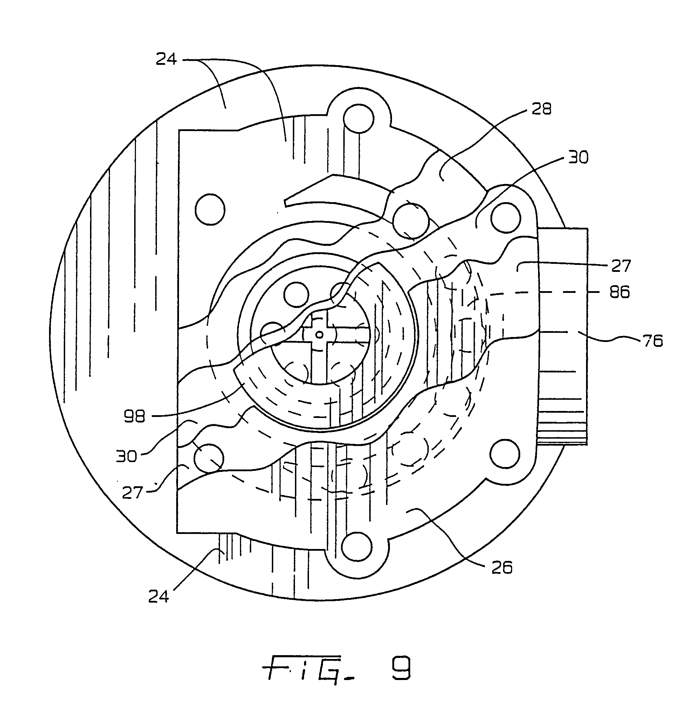

Each treatment tank assembly 12, 14 includes a valve head assembly 20 mounted on top and disposed in fluid communication with an interior of a treatment tank 22. Valve head assembly 20 (Figs. 6 and 9) includes a body 24 and cap 26 separated by a disk 28. Cap 26 includes a spacer 27. A flexible membrane 30, such as an elastomeric membrane, overlies disk 28 and is disposed between cap 26 and disk 28. Body 24 includes a flange 32 disposed near a bottom end thereof and engages a treatment tank 22, such as shown in Figs. 1-5. Body 24 also includes a plurality of passages for allowing a flow of fluid through valve head assembly 20. To wit, body 24 includes a first passage in which is disposed a plunger valve 34. A compression spring 38 biases plunger valve 34 in a downward, closed position, whereby plunger valve 34 is in contact with shoulder 40.

Body 24 also includes a second passage 42 in which is disposed a poppet-type plunger valve 44. Disposed at a bottom end of valve 44 are first and second annular sealing rings 46, 48, which abut shoulders 50, 52, respectively. Disposed at an upper end of valve 44 is a flexible seal 54 which allows a flow of fluid therepast in an upward direction, but prevents a flow of fluid therepast in a downward direction.

Valve 44 includes a longitudinally extending opening 56 in which is disposed an insert 58 defining a venturi section 60 Each of valve 44 and insert 58 have radially extending openings 62 which allow a flow of fluid into venturi section 60. Plunger valve 44 also includes a plurality of radial openings 94 and a longitudinal opening 96 allowing a flow of fluid therethrough and into venturi section 60. Disposed between valve 44 and second passage 42 is a chamber 64.

Disposed above second passage 42 is a third passage 66, in which is inserted a cylindrical sleeve 68. A plurality of 0-ring seals 70 provide a seal between third passage 66 and sleeve 68.

Body 24 also includes an inlet passage 72, outlet passage 74 and drain passage 76, each of which are respectively, fluidly connected to chamber 64, chamber 78 and chamber 80 via radial passages 82, 84 and 86.

Additional openings within body 24 include longitudinally extending openings 88, 90 providing communication between chamber 64 and the interior of treatment tank 22; and a passage 92 providing communication between chamber 80 and a valve described hereinafter. A fourth passage 69 defines a chamber 71 which is disposed below plunger valve 34. A radially extending opening 120 is in communication with the exterior of body 24 and chamber 71. A radially extending opening 122 is in communication with the exterior of body 24 and chamber 78.

Disposed between plunger valve 44 and disk 28 is a compression spring 93 which biases plunger valve 44 toward a first, closed position. Flexible membrane 30, disposed on top of disk 28, includes a disk 98 with a central opening 100 therein. Disposed within opening 100 is a screened filter 99. Flexible membrane 30, disk 98 and cap 26 define a chamber 102 therebetween. Chamber 102 is also disposed in fluid communication with a passage 104 formed in cap 26.

Figs. 1-5 illustrate treatment tank assemblies 12, 14 interconnected by manifold 16 and electronic logic control board 18, whereby one or both of treatment tank assemblies 12, 14 may be placed in an in-service mode or one regeneration mode. Logic control board 18 is shown connected to a user interface device or numeric keypad 106 allowing a user to manually control logic control board 18, and in turn control treatment tank assemblies 12, 14. Logic control board 18 is also connected to a first solenoid valve 108 via line 110, a second solenoid valve 112 via line 114 and a third solenoid valve 116 via line 118. Each of treatment tank assemblies 12, 14 are constructed substantially the same in the embodiment shown, and thus have like reference numbers. For purposes of clarity, however, not all of the reference numbers have been indicated on treatment tank assembly 12.

First valve 108 has an inlet line 124 disposed in communication with passage 92 of body 24 (Fig. 6). First valve 108 also includes an outlet line 126 disposed in communication with each of passage 104 and chamber 102 within cap 26, and regenerant induction line 128 via outlet line 130. Disposed within induction line 128 is a ball valve 132 allowing a flow of fluid in a downward direction, and disposed within outlet line 130 is a spring loaded check valve 134 allowing a flow of pressurized fluid in an upward direction.

Second valve 112 includes an inlet line 136 which is connected to radially extending opening 122 and chamber 71 (Fig. 6) and an outlet line 138 connected to an inlet line 140 of third valve 116. A ball valve 141 disposed between inlet line 140 and induction line 128 allows a flow of fluid in an upward direction.

A brine tank 142 is connected to regenerant induction line 128 and has a regenerant 144 disposed therein, such as sodium chloride. A float valve assembly 146 controls a level of liquid within brine tank 142, as is known.

Manifold 16 generally includes three T-pipes coupled together for convenience purposes. A first pipe 148 includes outlets 150 which are connected to respective inlet passages 72 (Fig. 6), and an inlet 152 which receives pressurized liquid from an external source (not shown), such as a water pump. Second pipe 154 includes inlets 156 which are connected to respective flow meters 158, which in turn are connected to outlet passage 74 (Fig. 6). Second pipe 154 also includes an outlet 160 connected to a line for supplying treated water to a faucet or the like. Third pipe 162 includes inlets 164 connected to drain passage 76 (Fig. 6) and an outlet 166 connected to a drain pipe.

Flow meters 158 (shown in greater detail in Fig. 6) include first housing part 168 sealingly coupled to a second housing part 170. A wheel 172 having a plurality of vanes is carried by a shaft 174 which in turn is rotatably supported by first and second housing part 168, 170. The interconnection between shaft 174 and first and second housing parts 168, 170 may include bearings. Moreover, the configuration of the vanes within wheel 172 is such that wheel 172 rotates upon a flow in either direction within flow meter 158. Wheel 172 includes at least one magnet 176 disposed therein which rotates past a sensor 178 upon rotation of wheel 172. Sensor 178 is connected via line 180 (Fig. 1) to logic control board 18.

Referring now to Figs. 1-5, operation of the present invention will be described. For each of the modes of operation described above, logic control board 18 controls the length of time in which first valve 108, second valve 112 and third valve 116 are in an open or closed position.

Fig. 1 discloses a mode of operation wherein each of treatment tank assemblies 12, 14 are in an in-service mode. Poppet-type plunger valve 44 is in the downward, closed position; and plunger valve 34 is in the upward, open position. Water flows through first pipe 148 and into chamber 64 of valve head assembly 20. The water then flows downward through longitudinal openings 88, 90, through filter 181, and into treatment tank 22. The water flows in a downward direction through resin bed 182, whereby impurities such as calcium and magnesium are removed from the water via ion exchange. The water then flows through a filter 184 and into vertical pipe 186. The pressurized water moves plunger valve 34 to the upright, open position and flows therepast to outlet 160 of second pipe 154.

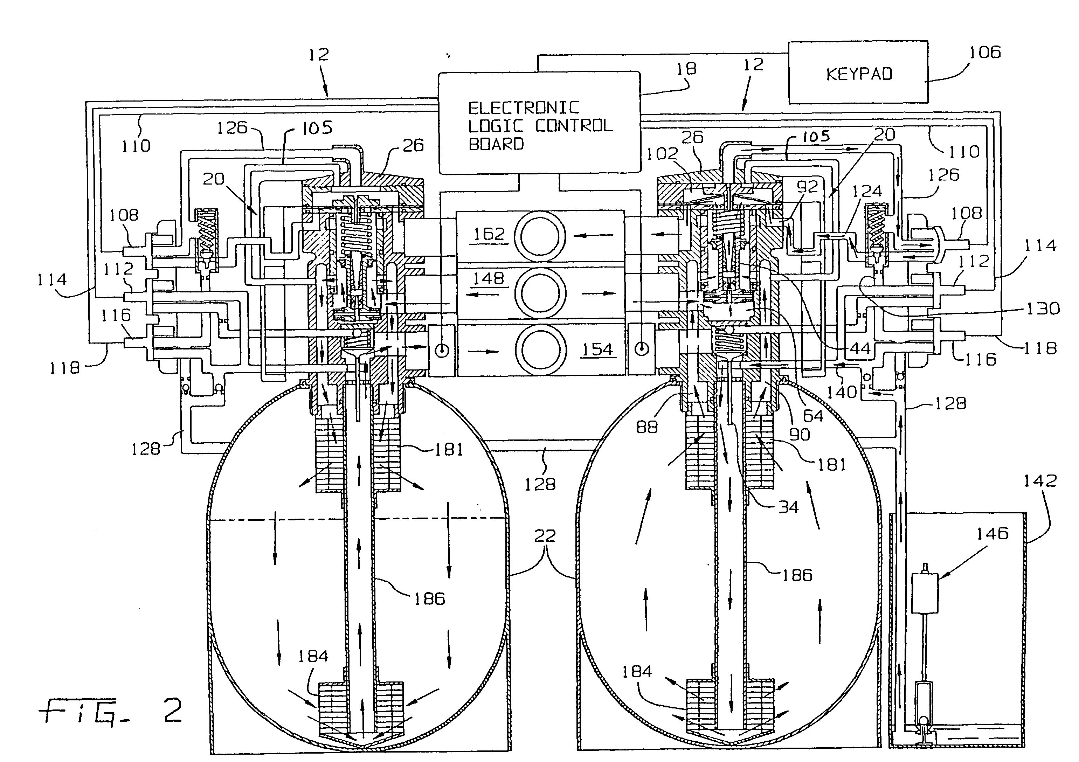

Fig. 2 illustrates treatment tank assembly 12 in an in-service mode and treatment tank assembly 14 in a brine draw mode of operation. Fluid flow through treatment tank assembly 12 is as described above with regard to Fig. 1. With regard to treatment tank assembly 14, first valve 108 is in an open position and second and third valves 112 and 116 are in a closed position. When third valve 116 is closed, pressurized fluid is no longer supplied within cap 26. When first valve 108 is opened, water flows past seal 54 of plunger valve 44 and causes plunger valve 44 to move to the upward, open position, as shown. The pressurized water within chamber 80 causes flexible membrane 30 to move to the upper position shown, whereby water may flow through inlet line 124 to first valve 108. The water then flows through outlet line 126 and into chamber 102. The small diameter central opening 100 (Fig. 6) allows a correspondingly small amount of fluid to flow therethrough. The amount of water thus flowing through first valve 108 is regulated by varying the diameter of central screened opening 100. In contrast, passage 92 has a relatively large diameter. Therefore, substantially all the water flowing into chamber 80 flows out through passage 92, and a lesser amount of the fluid flowing through chamber 80 flows through first valve 108.

When plunger valve 44 is in the upward position whereby annular sealing ring 46 engages shoulder 50, water flows through radial openings 94 and longitudinal opening 96 into venturi section 60. Venturi section 60 creates a low pressure within chamber 64, which in turn induces a flow of water through longitudinal openings 88, 90 and first pipe 148. The flow of water into chamber 64 in turn induces a flow of brine from brine tank, 142 through induction line 128, radially extending opening 120, filter 181, vertical pipe 186 and filter 184. As in apparent from Fig. 2, a counter-current regeneration is effected, wherein the flow of water through treatment assembly 14 during an in-service mode is opposite to the flow of water through treatment tank assembly 14 during a brine draw mode.

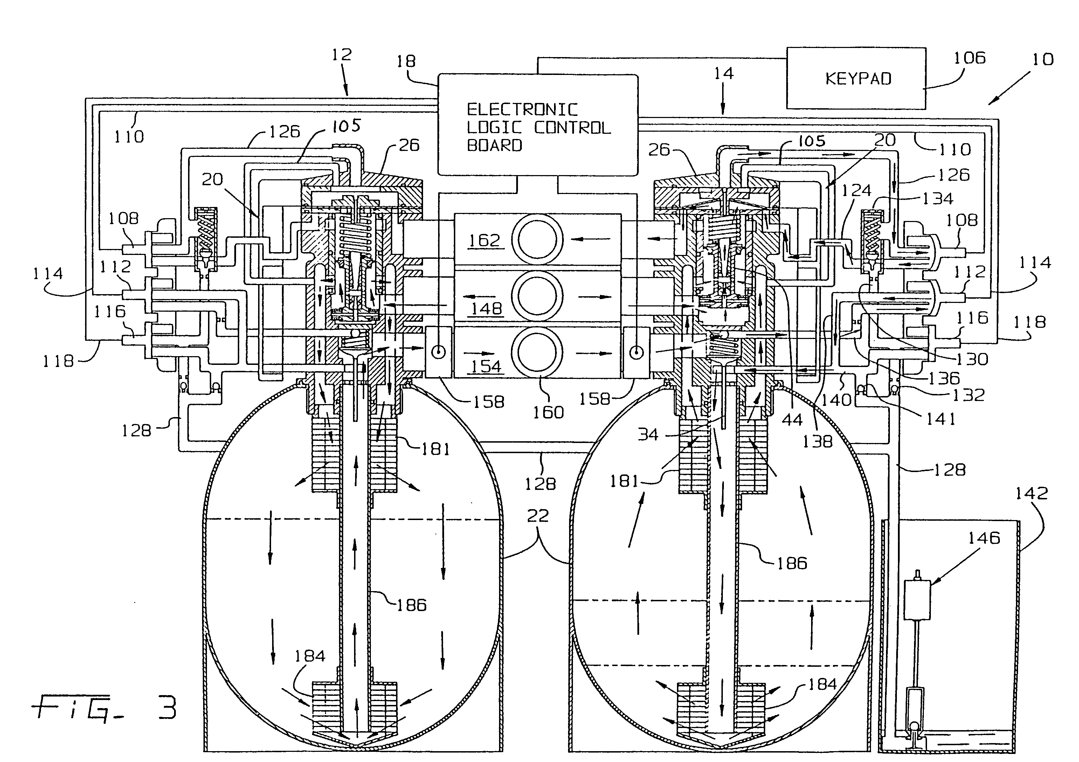

Fig. 3 illustrates a mode of operation wherein treatment tank assembly 12 is in an in-service mode and treatment tank assembly 14 is in a pulsating rinse mode. It will be noted that plunger valve 44 is an upper position for inducing a flow of liquid as described above with regard to Fig. 2. However, rather than receiving a supply of water from brine tank 142 via induction line 128, second valve 112 is moved to an open position whereby pressurized and treated water from treatment tank assembly 12 flows through inlet line 136 and into treatment tank 22 in a counter current direction. The pressurized water within inlet line 140 also moves ball valve 141 to a closed position as shown, wherein fluid does not flow into brine tank 142.

During the pulsating rinse mode, logic control board 18 controls first valve 108 whereby at least two regeneration options may be effected. To wit, keypad 108 may be utilized to select either a full pulse regeneration, a half pulse regeneration, no pulse regeneration and filter regeneration. During full pulse regeneration, 100% of the pulse rinse is activated, which means valve 108 is on all the time. Valve 112 is on one second and off three seconds, during full pulse regeneration. During no pulse regeneration, only a maximum of 12% of the pulse program is activated (to prevent channeling of the resin bed), which means valve 108 and 112 are on the majority of the time. During half pulse regeneration, 50% of the full pulse program is activated, using the same valve as stated above. With the balance of the cycle valve 112 stays on. During filter regeneration, brine cycle and refill cycle is significantly reduced to create a vacuum in the tank at about 10% of the cycle time based on capacity. The refill cycle is reduced accordingly. An extended full pulse regeneration is initiated during the filter regeneration. These regeneration options are on time or demand mode.

It will be appreciated from Fig. 3 that treated water is utilized from treatment tank assembly 12 to rinse the resin bed within treatment tank assembly 14. The embodiment as shown not only monitors treated water which flows out through outlet 160, but also monitors the flow of water used to rinse the resin bed in a parallel treatment tank assembly. That is, at least one flow meter 158 provides input pulses to logic control board 18, which in turn reduces the preset amount stored in memory corresponding to the volume of water transported from the treatment tank assembly during an in-service mode prior to regeneration thereof. Logic control board 18 receives input pulses from at least one flow meter 158 representing a volume of water flowing therepast. Each of treatment tank assemblies 12, 14 has a capacity at which the treatment tank assembly must be regenerated. For example, each treatment tank assembly shown in Figs. 1-5 has a capacity of exchanging 5,000 grains of hardness. For a particular application, the untreated water received via first pipe 148 has a hardness which falls within a known range per gallon, e.g., 6-10 parts per million. It is thus possible to calculate how many gallons of water may be transported through second pipe 154 prior to regeneration of the corresponding treatment tank assembly. Rather than using two flow meters 158 as shown in Figs. 1-5, it may also be possible to use a single flow meter attached to outlet 160 of second pipe 154.

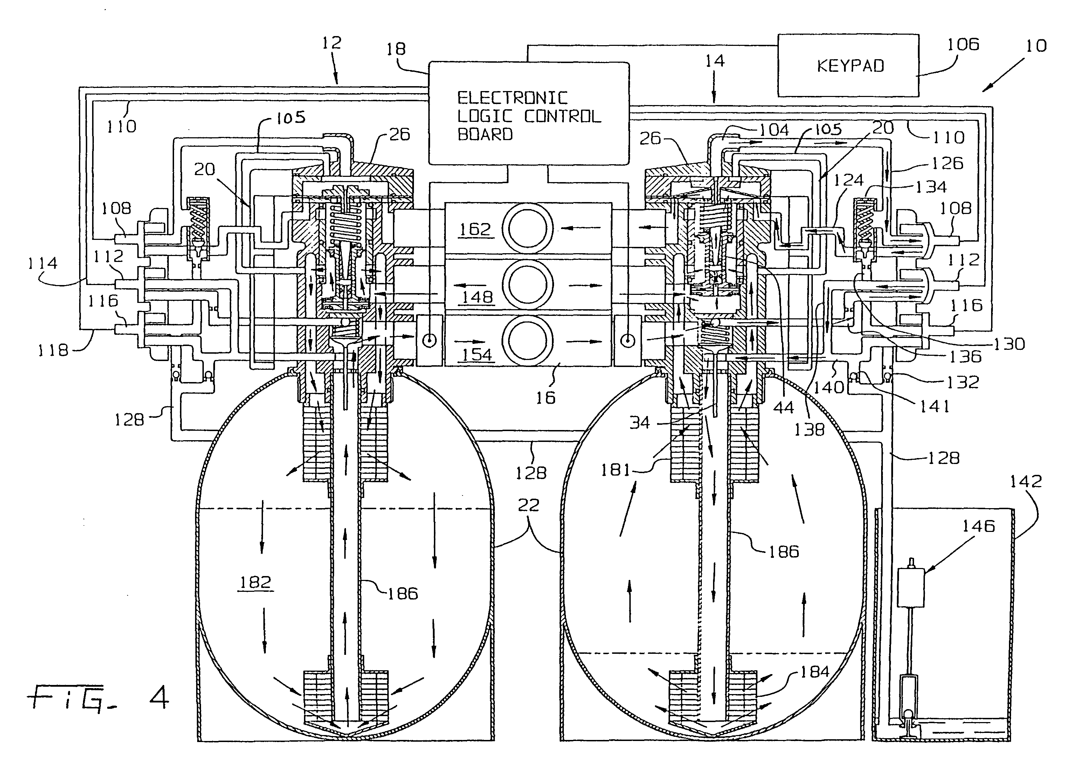

Fig. 4 illustrates another mode of operation wherein treatment tank assembly 12 is in an in-service mode and treatment tank assembly 14 is in a purge or fast rinse mode. The flow paths within treatment tank assembly 14 are the same as described above with regard to the pulsating rinse mode shown in Fig. 3. However, rather than opening and closing first valve 108 to provide a pulsating rinse, first valve 108 is instead maintained in an open position whereby treated water from treatment tank assembly 12 continuously flows through treatment tank 22 in a counter current direction.

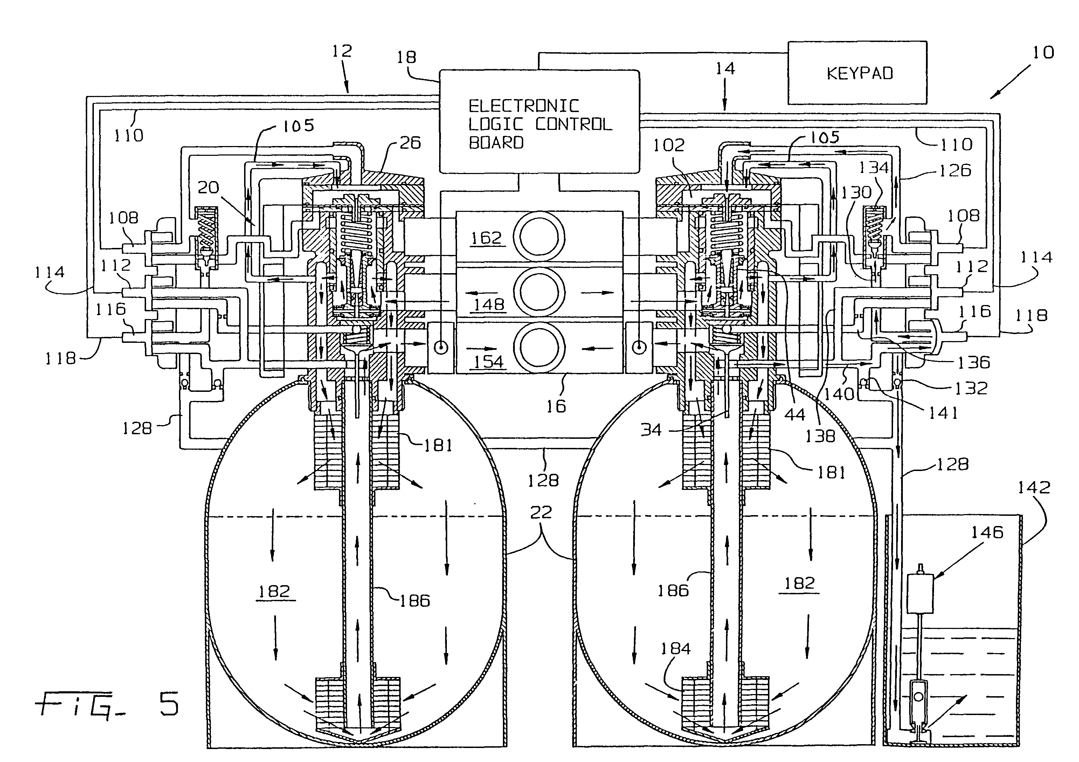

Fig. 5 illustrates another mode of operation of the present invention wherein treatment tank assembly 12 is in an in-service mode, and treatment tank assembly 14 is in a brine tank refill mode. As is apparent, treated water is available to second pipe 154 from treatment tank assembly 14. In addition, first valve 108 and second valve 112 are in a closed position and third valve 116 is in an open position allowing treated water to flow both in an upward direction through outlet line 130 and a downward direction into brine tank 142 through induction line 128. The treated water flowing through outlet line 130 then flows through check valve 134, outlet line 126 and into chamber 102 for moving flexible membrane against disk 28 and closing passage 92 and drain passage 76. The treated water flowing in a downward direction through induction line 128 fills brine tank 142 to a predetermined level, as controlled by float valve assembly 146.

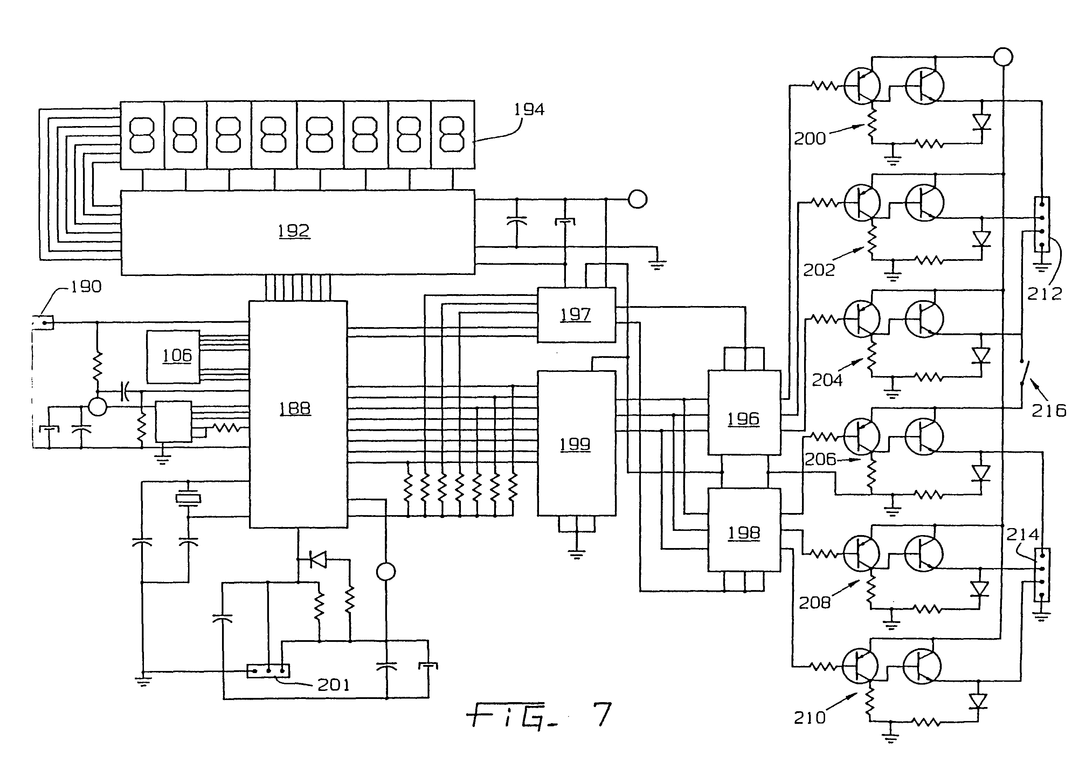

Fig. 7. is a schematic illustration of the circuitry of logic control board 18 shown in Figs. 1-5. Various components include microcontroller 188, key pad 106, key pad lock 190, amplifier/driver 192, display device 194 (such as an LED display), AND gates 196, 198, control gates 200, 202, 204, 206, 208 and 210, treatment tank solenoid valve control ports 212, 214, manual refill switch 216, latched line decoders 197, 199, and flow meter sensor ports 201. Microcontroller 188 receives input data from flow meter sensor ports 201, and provides output signals used for controlling solenoid valve control ports 212, 214. Control gates 200, 202, 204, 206, 208 and 210 are interposed between microcontroller 188 and solenoid valve control ports 212, 214, and respectively control the opening and closing of solenoid valves 108, 112 and 116. Display device 194 can be used to selectively display a total flow amount through a particular tank since a last regeneration, a total flow amount through the system since a predetermined point in time, an indication of which tank(s) are in an in-service mode or regeneration mode, an overlap amount for a particular tank, a preset amount for a particular tank, and other indicia of system performance and operation.

In the embodiment of the circuitry shown in Fig. 7, alternating current power is used to drive solenoid valves 108, 112 and 116. Conventional designs use direct current power to drive solenoid valves, which results in overheating and failure of the solenoid valves. The present invention therefore overcomes a problem of conventional designs by utilizing alternating current power.

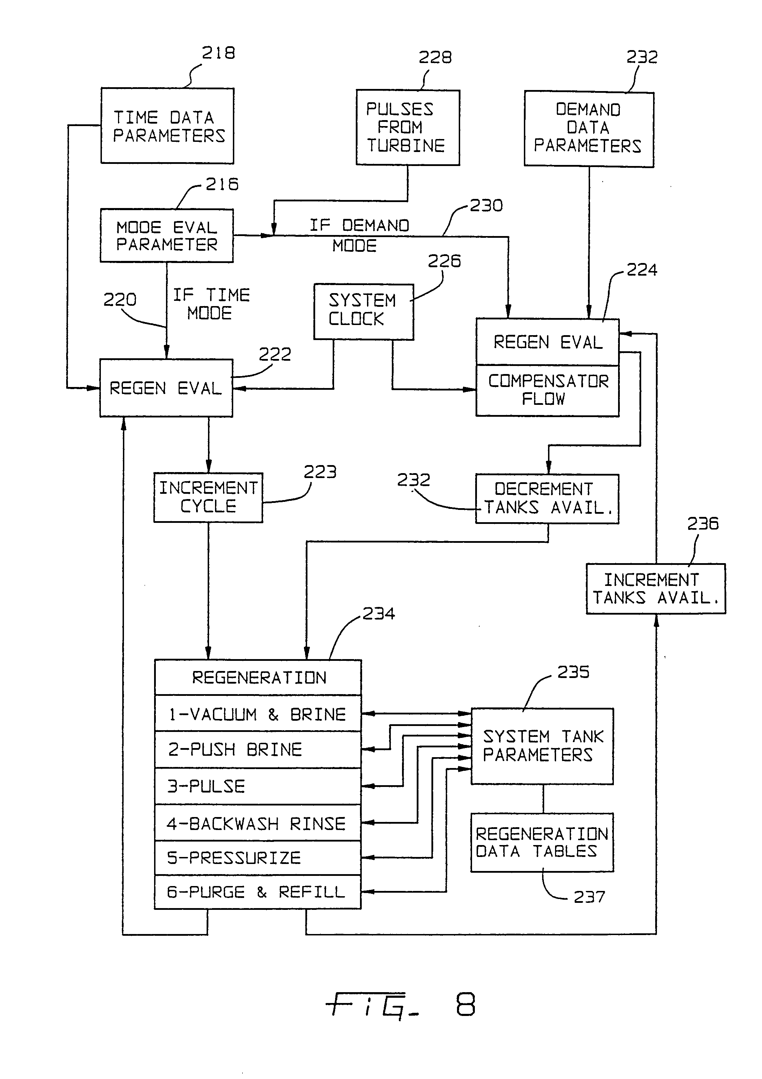

Fig. 8 illustrates a flow chart of the logic carried out by control board 18. Block 216 represents a selective mode evaluation parameter corresponding to either a time mode of operation or a demand mode of operation. For a time mode of operation, a particular treatment tank assembly is regenerated after a particular period of time. For a demand mode of operation, a particular treatment tank assembly is regenerated after a particular volumetric amount of liquid has been transported from a treatment tank assembly. If a time mode of operation is selected (line 220), a regeneration evaluation block 222 is utilized. In contrast, if a demand mode of operation is elected, a regeneration evaluation block 224 is used. Other data inputs to regeneration evaluation block 222 include time data parameter from block 218 representing a particular amount of time at which a treatment tank assembly is regenerated; and a time value of a system clock from block 226. Data inputs to regeneration evaluation block 224 include sensed pulses from a turbine or flow meter (block 228) via line 230; demand data parameter from block 232 representing a particular volume at which the treatment tank assembly is to be regenerated; and a time value from a system clock in block 226.

When regeneration evaluation block 224 determines that a preset amount of water has been transported from a particular treatment tank assembly, the particular treatment tank assembly to be regenerated is removed from memory as a tank available for an in-service mode (block 232) and regeneration of the particular treatment tank assembly occurs in block 234. After regeneration of the particular treatment tank assembly is completed, the treatment tank assembly is placed back in memory as being available for an in-service mode of operation in block 236. The "system tank parameters" (block 235) corresponds to physical data associated with a particular tank used, e.g., such as tank capacity and grains. Such data can be in the form of electronic data stored in a memory. Regeneration data tables (block 237) correspond to data indicating when a particular tank should be regenerated or timed modes within the regeneration, e.g., hardness of water, rinse modes, half pulse mode, etc.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention partains and which fall within the limits of the appended claims.

## Claims

1. A water treatment system (10) with a treatment tank (22) having an ion-exchange mineral bed (182) therein and a treatment tank assembly (12, 14) comprising:
- a valve head assembly (20) disposed on top of and in fluid communication with said treatment tank (22), said valve head assembly (20) including a passage means (32, 42, 64, 66, 72, 74, 76, 80, 88, 90) for allowing a flow of fluid through said valve head assembly (20), vacuum pressure creating means (44, 70) disposed within said passage means (32, 42, 64, 66, 72, 74, 76, 80, 88, 90) for creating a vacuum pressure within said treatment tank (22) and a drain (76) disposed within said passage means (32, 42, 64, 66, 72, 74, 76, 80, 88, 90) and at a downstream side of said vacuum pressure creating means (44, 70), and
- a valve (108) disposed at said downstream side of said vacuum pressure creating means (44, 70) in fluid communication with said passage means (32, 42, 64, 66, 72, 74, 76, 80, 88, 90), said valve (108) movable to an open position and a closed position for allowing fluid flow through said vacuum pressure creating means (44, 70), whereby a portion of fluid flows through said drain (76) and a lesser remaining portion of fluid flows through said valve (108) when said valve (108) is in said open position.

2. The water treatment system of claim 1, wherein said valve (108) comprises
a solenoid valve (108).

3. The water treatment system of claim 2, wherein said solenoid valve (108) and said drain (76) are disposed in parallel to each other at said downstream side of said vacuum pressure creating means (44, 70).

4. The water treatment system of claim 2 or 3, further comprising a processor (188) for controlling said solenoid valve (108) to effect one of at least two regeneration options selected form the group consisting of a full pulse regeneration, a half pulse regeneration, no pulsed regeneration and filter regeneration.

5. The water treatment system as claimed in any of the claims 2 to 4,
wherein said valve head assembly (20) includes a plurality of further solenoid valves (112, 116), each of said solenoid valves (108, 112, 116) movable to an open position and a closed position for allowing fluid flow through said vacuum pressure creating means (44, 70) and wherein said processor (188) includes means (200 - 210) for maintaining a selected one of said solenoid valves (108, 112, 116) in said open position for a predetermined amount of time.

6. The water treatment system of claim 5, further comprising an interface device (106) connected to said processor (188), said processor (188) including means for changing said predetermined amount of time
dependent on data input from said interface device (106).

7. The water treatment system of claim 6, wherein said interface device (106) comprises a numeric key pad (106).

8. The water treatment system as claimed in any of the claims 1 to 7
wherein said drain (76) constitutes a means for preventing debris from flowing through said valve (108).

9. The water treatment system as claimed in any of the claims 1 to 8,
wherein said passage means (32, 42, 64, 66, 72, 74, 76, 80, 88, 90) includes an inlet (72) and an outlet (74), and wherein said vacuum pressure creating means (44, 70) comprises a poppet-type plunger valve (44) having a venturi section (70), said plunger valve (44) movable to a first position when said valve (44) is in said closed position and a second position when said valve (44) is in said open position.

10. The water treatment system as claimed in any of the claims 1 to 9, further comprising a brine tank (142) connected to an interior of said treatment tank (22) wherein said vacuum pressure creating means (44, 70) may induce a flow of brine from said brine tank (142) through said treatment tank (22).

11. The water treatment system as claimed in any of the claims 1 to 10, comprising a plurality of treatment tanks (22) and a plurality of respectively associated treatment tank assemblies (12, 14).

12. The water treatment system of claim 11, wherein each of said treatment tanks (22) having an outlet (160) and wherein each of said treatment tank assemblies (12, 14) further comprising:
- a sensor (158) providing an output signal representing an amount of fluid flowing through the respectively associated treatment tank outlet (160); and
- a processor (188) receiving said output signal and controlling the valve (108) at the downstream side of the vacuum pressure creating means (44, 70) dependent on said output signal.

13. The water treatment system of claim 12, wherein said processor (188) includes means for determining at least one of:
- an amount of water flowing through all of said treatment tanks (22);
- an amount of water flowing through each of said treatment tanks (22) during an in-service mode of each respective said treatment tank (22);
- an amount of lost water per unit of time which is lost by said system
- an amount of water used by one of said treatment tanks (22) during an in-service mode to regenerate another said tank (22);
- a preset amount representing a volume of water through one of said treatment tanks (22) at which said one tank (22) is regenerated; and
- a reduction in said preset amount for a particular treatment tank (22) by an overlap amount representing an amount of water which has flowed through said particular treatment tank (22) since a last regeneration for said particular treatment tank (22) minus said preset amount.

14. A method for regenerating an ion-exchange and filter bed (182) in a water treatment tank (22), comprising the steps of:
providing a treatment tank assembly (12, 14) comprising
- a valve head assembly (20) disposed on top of and in fluid communication with said treatment tank (22), said valve head assembly (20) including a passage means (32, 42, 64, 66, 72, 74, 76, 80, 88, 90) for allowing a flow of fluid through said valve head assembly (20), vacuum pressure creating means (44, 70) disposed within said passage means (32, 42, 64, 66, 72, 74, 76, 80, 88, 90) for creating a vacuum pressure within said treatment tank (22) and a drain (76) disposed within said passage means (32, 42, 64, 66, 72, 74, 76, 80, 88, 90) and at a downstream side of said vacuum pressure creating means (44, 70), and
- a valve (108) disposed at said downstream side of said vacuum pressure creating means (44, 70) in fluid communication with said passage means (32, 42, 64, 66, 72, 74, 76, 80, 88, 90) said valve (108) movable to an open position and a closed position for allowing fluid flow through said vacuum pressure creating means (44, 70),
whereby a portion of fluid flows through said drain (76) and a lesser remaining portion of fluid flows through said valve (108) when said valve (108) is in said open position;
providing a brine tank (142) fluidly connected to an interior of said treatment tank (22);
actuating said valve (108) to allow a flow of fluid through said venturi section (70) and create a vacuum pressure within said valve head
assembly (20) and said treatment tank interior, whereby brine from said brine tank (142) is drawn through said treatment tank (22) and said venturi section (70); and
discharging a first portion of the fluid flowing through said venturi section (70) to said drain (76) and a lesser remaining second portion of the fluid to said valve (108).

15. The method of claim 14, wherein said actuating step comprises creating a vacuum pressure within said valve head assembly (20) and said treatment tank interior, whereby brine from said brine tank (142) is drawn through said treatment tank (22) in a direction which is counter-current to a direction of fluid flow through said treatment tank (22) during an in-service mode.

16. The method of claim 14 or 15, further comprising the steps of:
providing at least two treatment tanks (22); and
determining an amount of water flowing through each of said treatment tanks(22) during an in-service mode of each respective said treatment tank (22).

17. The method of claim 16, comprising the further step of adjusting said determined amount of water using a selectable lost water value representing an amount of non-recoverable lost water per unit of time.

18. The method of claim 16, comprising the further step of adjusting said determined amount of water using an amount of water used by one said tank (22) during an in-service mode to regenerate another said tank.

19. The method of claim 16, comprising the further step of utilizing a preset amount to regenerate at least one of said treatment tanks (22) when said determined amount is equal to said preset amount.

20. The method of claim 19, comprising the further step of reducing said preset amount for a particular treatment tank (22) by an overlap amount representing an amount of water which has flowed through said particular treatment tank (22) since a last regeneration for said particular treatment tank (22) minus said preset amount.

21. The method as claimed in any of the claims 14 to 20, wherein said first portion of the fluid flows through a primary flow path and said second portion of the fluid flows through a secondary flow path.

## Patentansprüche

1. Wasserbehandlungssystem (10) mit einem Behandlungstank (22), der ein Ionenaustauschmineralbett (182) darin aufweist, und einer Behandlungstankbaugruppe (12, 14), wobei das Wasserbehandlungssystem (10) Folgendes umfasst:
eine Ventilkopfbaugruppe (20), die oben auf und in Fluidkommunikation mit dem Behandlungstank (22) angeordnet ist, wobei die Ventilkopfbaugruppe (20) ein Durchgangsmittel (32, 42, 64, 66, 72, 74, 76, 80, 88, 90) umfasst, um eine Fluidströmung durch die Ventilkopfbaugruppe (20) zu ermöglichen, ein Vakuumerzeugungsmittel (44, 70), das in dem Durchgangsmittel (32, 42, 64, 66, 72, 74, 76, 80, 88, 90) angeordnet ist, um ein Vakuum in dem Behandlungstank (22) zu erzeugen, und einen Abfluss (76), der in dem Durchgangsmittel (32, 42, 64, 66, 72, 74, 76, 80, 88, 90) und an einer stromabwärts befindlichen Seite des Vakuumerzeugungsmittels (44, 70) angeordnet ist, und ein Ventil (108), das an der stromabwärts befindlichen Seite des Vakuumerzeugungsmittels (44, 70) in Fluidkommunikation mit dem Durchgangsmittel (32, 42, 64, 66, 72, 74, 76, 80, 88, 90) angeordnet ist, wobei das Ventil (108) in eine offene Position und eine geschlossene Position beweglich ist, um eine Fluidströmung durch das Vakuumerzeugungsmittel (44, 70) zu ermöglichen, wobei ein Teil des Fluids durch den Abfluss (76) fließt und ein kleinerer restlicher Teil des Fluids durch das Ventil (108) fließt, wenn sich das Ventil (108) in der offenen Position befindet.

2. Wasserbehandlungssystem nach Anspruch 1, wobei das Ventil (108) ein Magnetventil (108) umfasst.

3. Wasserbehandlungssystem nach Anspruch 2, wobei das Magnetventil (108) und der Abfluss (76) an der stromabwärts befindlichen Seite des Vakuumerzeugungsmittels (44, 70) parallel zueinander angeordnet sind.

4. Wasserbehandlungssystem nach Anspruch 2 oder 3, das des Weiteren einen Prozessor (188) zur Steuerung des Magnetventils (108) umfasst, um eine von mindestens zwei Regenerationsoptionen auszuführen, die aus der Gruppe ausgewählt werden, die aus einer Vollimpulsregeneration, einer Halbimpulsregeneration, einer nicht gepulsten Regeneration und einer Filterregeneration besteht.

5. Wasserbehandlungssystem nach einem der Ansprüche 2 bis 4, wobei die Ventilkopfbaugruppe (20) eine Vielzahl weiterer Magnetventile (112, 116) umfasst, wobei jedes der Magnetventile (108, 112, 116) in eine offene Position und eine geschlossene Position beweglich ist, um eine Fluidströmung durch das Vakuumerzeugungsmittel (44, 70) zu ermöglichen, und wobei der Prozessor (188) ein Mittel (200 - 210) umfasst, um ein ausgewähltes Magnetventil der Magnetventile (108, 112, 116) für einen vorherbestimmten Zeitraum in der offenen Position zu halten.

6. Wasserbehandlungssystem nach Anspruch 5, das des Weiteren eine Schnittstellenvorrichtung (106) umfasst, die mit dem Prozessor (188) verbunden ist, und der Prozessor (188) ein Mittel umfasst, um den vorherbestimmten Zeitraum abhängig von einer Dateneingabe von der Schnittstellenvorrichtung (106) zu verändern.

7. Wasserbehandlungssystem nach Anspruch 6, wobei die Schnittstellenvorrichtung (106) ein nummerisches Tastenfeld (106) umfasst.

8. Wasserbehandlungssystem nach einem der Ansprüche 1 bis 7, wobei der Abfluss (76) ein Mittel darstellt, um zu verhindern, dass Schmutz durch das Ventil (108) fließt.

9. Wasserbehandlungssystem nach einem der Ansprüche 1 bis 8, wobei das Durchgangsmittel (32,42, 64, 66, 72, 74, 76, 80, 88, 90) einen Einlass (72) und einen Auslass (74) umfasst und das Vakuumerzeugungsmittel (44, 70) ein Tellerkolbenventil (44) mit einem Venturi-Abschnitt (70) umfasst, wobei das Kolbenventil (44) in eine erste Position beweglich ist, wenn sich das Ventil (44) in der geschlossenen Position befindet, und in eine zweite Position beweglich ist, wenn sich das Ventil (44) in der offenen Position befindet.

10. Wasserbehandlungssystem nach einem der Ansprüche 1 bis 9, das des Weiteren einen Soletank (142) umfasst, der mit einem Innenraum des Behandlungstanks (22) verbunden ist, wobei das Vakuumerzeugungsmittel (44, 70) eine Soleströmung aus dem Soletank (142) durch den Behandlungstank (22) hervorrufen kann.

11. Wasserbehandlungssystem nach einem der Ansprüche 1 bis 10, das eine Vielzahl von Behandlungstanks (22) und eine Vielzahl von entsprechend zugeordneten Behandlungstankbaugruppen (12, 14) umfasst.

12. Wasserbehandlungssystem nach Anspruch 11, wobei jeder der Behandlungstanks (22) einen Auslass (160) aufweist und jede der Behandlungstankbaugruppen (12, 14) des Weiteren Folgendes umfasst:
- einen Sensor (158), der ein Ausgabesignal bereitstellt, das eine Fluidmenge darstellt, die durch den entsprechend zugeordneten Behandlungstankauslass (160) fließt; und
- einen Prozessor (188), der das Ausgabesignal empfängt und in Abhängigkeit von dem Ausgabesignal das Ventil (108) an der stromabwärts befindlichen Seite des Vakuumerzeugungsmittels (44, 70) steuert.

13. Wasserbehandlungssystem nach Anspruch 12, wobei der Prozessor (188) ein Mittel zur Bestimmung mindestens eines der folgenden Werte umfasst:
- einer Wassermenge, die durch sämtliche Behandlungstanks (22) fließt;
- einer Wassermenge, die während eines Betriebsmodus jedes entsprechenden Behandlungstanks (22) durch jeden der Behandlungstanks (22) fließt;
- eine verlorene Wassermenge pro Zeiteinheit, die das System verliert
- eine Wassermenge, die während eines Betriebsmodus von einem der Behandlungstanks (22) verwendet wird, um einen anderen Tank (22) zu regenerieren;
- eine voreingestellte Menge, die ein Wasservolumen durch einen der Behandlungstanks (22) darstellt, an dem der eine Tank (22) regeneriert wird; und
- eine Verringerung der voreingestellten Menge für einen bestimmten Behandlungstank (22) durch eine Überlappungsmenge, die eine Wassermenge darstellt, die seit einer letzten Regeneration für den bestimmten Behandlungstank (22) durch den bestimmten Behandlungstank (22) geflossen ist, minus die voreingestellte Menge.

14. Verfahren zur Regenerierung eines Ionenaustausch- und Filterbetts (182) in einem Wasserbehandlungstank (22), das folgende Schritte umfasst:
Bereitstellen einer Behandlungstankbaugruppe (12, 14), die Folgendes umfasst:
- eine Ventilkopfbaugruppe (20), die oben auf und in Fluidkommunikation mit dem Behandlungstank (22) angeordnet ist, wobei die Ventilkopfbaugruppe (20) ein Durchgangsmittel (32, 42, 64, 66, 72, 74, 76, 80, 88, 90) umfasst, um eine Fluidströmung durch die Ventilkopfbaugruppe (20) zu ermöglichen, ein Vakuumerzeugungsmittel (44, 70), das in dem Durchgangsmittel (32, 42, 64, 66, 72, 74, 76, 80, 88, 90) angeordnet ist, um ein Vakuum in dem Behandlungstank (22) zu erzeugen, und einen Abfluss (76), der in dem Durchgangsmittel (32, 42, 64, 66, 72, 74, 76, 80, 88, 90) und an einer stromabwärts befindlichen Seite des Vakuumerzeugungsmittels (44, 70) angeordnet ist, und
- ein Ventil (108), das an der stromabwärts befindlichen Seite des Vakuumerzeugungsmittels (44, 70) in Fluidkommunikation mit dem Durchgangsmittel (32, 42, 64, 66, 72, 74, 76, 80, 88, 90) angeordnet ist, wobei das Ventil (108) in eine offene Position und eine geschlossene Position beweglich ist, um eine Fluidströmung durch das Vakuumerzeugungsmittel (44, 70) zu ermöglichen, wobei ein Teil des Fluids durch den Abfluss (76) fließt und ein kleinerer restlicher Teil des Fluids durch das Ventil (108) fließt, wenn sich das Ventil (108) in der offenen Position befindet;
Bereitstellen eines Soletanks (142), der in Fluidverbindung mit einem Innenraum des Behandlungstanks (22) steht;
Betätigen des Ventils (108), um eine Fluidströmung durch den Venturi-Abschnitt (70) zu ermöglichen und ein Vakuum in der Ventilkopfbaugruppe (20) und in dem Innenraum des Behandlungstanks zu erzeugen, wobei Sole aus dem Soletank (142) durch den Behandlungstank (22) und den Venturi-Abschnitt (70) gesogen wird; und
Ablassen eines ersten Teils des Fluids, das durch den Venturi-Abschnitt (70) fließt, in den Abfluss (76) und eines kleineren restlichen zweiten Teils des Fluids in das Ventil (108).

15. Verfahren nach Anspruch 14, wobei der Betätigungsschritt das Erzeugen eines Vakuums in der Ventilkopfbaugruppe (20) und dem Innenraum des Behandlungstanks umfasst und Sole aus dem Soletank (142) durch den Behandlungstank (22) in einer Richtung gesogen wird, die entgegengesetzt zu einer Fluidströmungsrichtung durch den Behandlungstank (22) während eines Betriebsmodus ist.

16. Verfahren nach Anspruch 14 oder 15, das des Weiteren folgende Schritte umfasst:
Bereitstellen von mindestens zwei Behandlungstanks (22); und
Bestimmen einer Wassermenge, die während eines Betriebsmodus jedes entsprechenden Behandlungstanks (22) durch jeden der Behandlungstanks (22) fließt.

17. Verfahren nach Anspruch 16, das den weiteren Schritt des Einstellens der bestimmten Wassermenge unter Verwendung eines wählbaren Werts für verlorenes Wasser umfasst, der eine Menge an nicht-rückgewinnbarem verlorenem Wasser pro Zeiteinheit darstellt.

18. Verfahren nach Anspruch 16, das den weiteren Schritt des Einstellens der bestimmten Wassermenge unter Verwendung einer Wassermenge umfasst, die von einem Tank (22) während eines Betriebsmodus verwendet wird, um einen anderen Tank zu regenerieren.

19. Verfahren nach Anspruch 16, das den weiteren Schritt des Verwendens einer voreingestellten Menge umfasst, um mindestens einen der Behandlungstanks (22) zu regenerieren, wenn die bestimmte Menge gleich der voreingestellten Menge ist.

20. Verfahren nach Anspruch 19, das den weiteren Schritt des Verringems der voreingestellten Menge für einen bestimmten Behandlungstank (22) um eine Überlappungsmenge umfasst, die eine Wassermenge darstellt, die seit der letzten Regeneration für den bestimmten Behandlungstank (22) durch den bestimmten Behandlungstank (22) geflossen ist, minus die voreingestellte Menge.

21. Verfahren nach einem der Ansprüche 14 bis 20, wobei der erste Teil des Fluids durch einen Primärströmungsweg fließt und der zweite Teil des Fluids durch einen Sekundärströmungsweg fließt.

## Revendications

1. Système de traitement d'eau (10) avec un réservoir de traitement (22) possédant un lit minéral à échange d'ions (182) dans celui-ci, et un ensemble de réservoir de traitement (12, 14) comprenant :
- un ensemble de tête de vanne (20) qui est disposé sur le haut dudit réservoir de traitement (22) et est en communication liquide avec celui-ci, ledit ensemble de tête de vanne (20) incluant un moyen de passage (32, 42, 64, 66, 72, 74, 76, 80, 88, 90) pour permettre à un liquide de s'écouler à travers ledit ensemble de tête de vanne (20), un moyen de création de dépression (44, 70) disposé à l'intérieur dudit moyen de passage (32, 42, 64, 66, 72, 74, 76, 80, 88, 90) afin de créer une dépression à l'intérieur dudit réservoir de traitement (22) et une évacuation (76) qui est disposée à l'intérieur dudit moyen de passage (32, 42, 64, 66, 72, 74, 76, 80, 88, 90) et au niveau d'un côté aval dudit moyen de création de dépression (44, 70), et
- une vanne (108) disposée au niveau dudit côté aval dudit moyen de création de dépression (44, 70) qui est en communication liquide avec ledit moyen de passage (32, 42, 64, 66, 72, 74, 76, 80, 88, 90), ladite vanne (108) pouvant être déplacée vers une position ouverte et une position fermée pour permettre au liquide de s'écouler à travers ledit moyen de création de dépression (44, 70), cas dans lequel une partie du liquide s'écoule à travers ladite évacuation (76) et une partie restante moindre de liquide s'écoule à travers ladite vanne (108) lorsque ladite vanne (108) se trouve dans ladite position ouverte.

2. Le système de traitement d'eau de la revendication 1, dans lequel ladite vanne (108) comprend une électro-vanne (108).

3. Le système de traitement d'eau de la revendication 2, dans lequel ladite électro-vanne (108) et ladite évacuation (76) sont disposées en parallèle l'une par rapport à l'autre au niveau dudit côté aval dudit moyen de création de dépression (44, 70).

4. Le système de traitement d'eau de la revendication 2 ou 3, comprenant en outre un processeur (188) servant à contrôler ladite électro-vanne (108) afin d'effectuer une au moins de deux options de régénération sélectionnées à partir du groupe composé d'une régénération à impulsion complète, d'une régénération à demi-impulsion, d'une régénération sans impulsion et d'une régénération à filtre.

5. Le système de traitement d'eau, selon l'une quelconque des revendications 2 à 4, dans lequel ledit ensemble de tête de vanne (20) inclut une pluralité d'électro-vannes supplémentaires (112, 116), chacune desdites électro-vannes (108, 112, 116) pouvant être déplacée vers une position ouverte et une position fermée pour permettre au liquide de s'écouler à travers ledit moyen de création de dépression (44, 70), et dans lequel ledit processeur (188) comporte un moyen (200 - 210) servant à maintenir une électro-vanne sélectionnée parmi lesdites électro-vannes (108, 112, 116) dans ladite position ouverte pendant un intervalle de temps prédéterminé.

6. Le système de traitement d'eau de la revendication 5, comprenant en outre un dispositif d'interface (106) qui est connecté audit processeur (188), ledit processeur (188) comprenant un moyen permettant de changer ledit intervalle de temps prédéterminé en fonction des données introduites à partir dudit dispositif d'interface (106).

7. Le système de traitement d'eau de la revendication 6, dans lequel ledit dispositif d'interface (106) comprend un bloc de touches numériques (106).

8. Le système de traitement d'eau, selon l'une quelconque des revendications 1 à 7, dans lequel ladite évacuation (76) constitue un moyen pour empêcher les débris de passer à travers ladite vanne (108).

9. Le système de traitement d'eau, selon l'une quelconque des revendications 1 à 8, dans lequel ledit moyen de passage (32, 42, 64, 66, 72, 74, 76, 80, 88, 90) comporte un orifice d'entrée (72) et un orifice de sortie (74), et dans lequel ledit moyen de création de dépression (44, 70) comprend une vanne à piston de type champignon (44) munie d'une section à venturi (70), ladite vanne à piston (44) pouvant être déplacée vers une première position lorsque ladite vanne (44) se trouve dans ladite position fermée et une deuxième position lorsque ladite vanne (44) se trouve dans ladite position ouverte.

10. Le système de traitement d'eau, selon l'une quelconque des revendications 1 à 9, comprenant en outre un réservoir de saumure (142) qui est raccordé à un espace interne dudit réservoir de traitement (22) dans lequel ledit moyen de création de dépression (44, 70) peut provoquer un écoulement de saumure depuis ledit réservoir de saumure (142) à travers ledit réservoir de traitement (22).

11. Le système de traitement d'eau, selon l'une quelconque des revendications 1 à 10, comprenant une pluralité de réservoirs de traitement (22) et une pluralité d'ensembles de réservoir de traitement (12, 14) qui leur sont respectivement associés.

12. Le système de traitement d'eau de la revendication 11, dans lequel chacun desdits réservoirs de traitement (22) possède un orifice de sortie (160) et dans lequel chacun desdits ensembles de réservoir de traitement (12, 14) comprend en outre :
- un capteur (158) pour fournir un signal de sortie qui représente une quantité de liquide passant à travers l'orifice de sortie (160) du réservoir de traitement respectivement associé ; et
- un processeur (188) qui reçoit ledit signal de sortie et contrôle la vanne (108) au niveau du côté aval du moyen de création de dépression (44, 70) en fonction dudit signal de sortie.

13. Le système de traitement d'eau de la revendication 12, dans lequel ledit processeur (188) inclut des moyens permettant de déterminer au moins l'un des éléments suivants:
- une quantité d'eau passant à travers la totalité desdits réservoirs de traitement (22) ;
- une quantité d'eau passant à travers chacun desdits réservoirs de traitement (22) pendant un mode "en service" de chaque réservoir de traitement respectif (22) ;
- une quantité d'eau perdue par unité de temps qui est perdue par ledit système ;
- une quantité d'eau utilisée par l'un desdits réservoirs de traitement (22) pendant un mode "en service" afin de régénérer un autre desdits réservoirs (22);
- une quantité préréglée qui représente un volume d'eau passant à travers l'un desdits réservoirs de traitement (22) au niveau duquel ledit un réservoir (22) est régénéré ; et
- une réduction dans ladite quantité préréglée pour un réservoir de traitement spécifique (22) d'une quantité de chevauchement qui représente une quantité d'eau qui a passé à travers ledit réservoir de traitement spécifique (22) depuis une dernière régénération pour ledit réservoir de traitement spécifique (22) moins ladite quantité préréglée.

14. Procédé servant à régénérer un lit de filtration et à échange d'ions (182) dans un réservoir de traitement d'eau (22), comprenant les étapes suivantes :
mise à disposition d'un ensemble de réservoir de traitement (12, 14) comportant:
- un ensemble de tête de vanne (20) qui est disposé sur le haut dudit réservoir de traitement (22) et est en communication liquide avec celui-ci, ledit ensemble de tête de vanne (20) incluant un moyen de passage (32, 42, 64, 66, 72, 74, 76, 80, 88, 90) pour permettre à un liquide de s'écouler à travers ledit ensemble de tête de vanne (20), un moyen de création de dépression (44, 70) disposé à l'intérieur dudit moyen de passage (32, 42, 64, 66, 72, 74, 76, 80, 88, 90) afin de créer une dépression à l'intérieur dudit réservoir de traitement (22) et une évacuation (76) qui est disposée à l'intérieur dudit moyen de passage (32, 42, 64, 66, 72, 74, 76, 80, 88, 90) et au niveau d'un côté aval dudit moyen de création de dépression (44, 70), et
- une vanne (108) disposée au niveau dudit côté aval dudit moyen de création de dépression (44, 70) qui est en communication liquide avec ledit moyen de passage (32, 42, 64, 66, 72, 74, 76, 80, 88, 90), ladite vanne (108) pouvant être déplacée vers une position ouverte et une position fermée pour permettre au liquide de s'écouler à travers ledit moyen de création de dépression (44, 70), cas dans lequel une partie du liquide s'écoule à travers ladite évacuation (76) et une partie restante moindre de liquide s'écoule à travers ladite vanne (108) lorsque ladite vanne (108) se trouve dans ladite position ouverte ;
mise à disposition d'un réservoir de saumure (142) qui est en raccordement liquide avec un espace interne dudit réservoir de traitement (22) ; actionnement de ladite vanne (108) pour permettre un écoulement de liquide à travers ladite section à venturi (70) et créer une dépression à l'intérieur dudit ensemble de tête de vanne (20) et dudit espace intérieur du réservoir de traitement, cas dans lequel la saumure provenant dudit réservoir de saumure (142) est aspirée à travers ledit réservoir de traitement (22) et ladite section à venturi (70) ; et
décharge d'une première partie du liquide passant à travers ladite section à venturi (70) pour l'amener vers ladite évacuation (76), et d'une deuxième partie restante moindre de liquide pour l'amener vers ladite vanne (108).

15. Le procédé de la revendication 14, dans lequel ladite étape d'actionnement comprend la création d'une dépression à l'intérieur dudit ensemble de tête de vanne (20) et dudit espace intérieur du réservoir de traitement, cas dans lequel la saumure provenant dudit réservoir de saumure (142) est aspirée à travers ledit réservoir de traitement (22) dans une direction qui est à contre-courant d'une direction d'écoulement de liquide à travers ledit réservoir de traitement (22) pendant un mode "en service".

16. Le procédé de la revendication 14 ou 15, comprenant en outre les étapes suivantes :
mise à disposition de deux réservoirs de traitement (22) au moins ; et
détermination d'une quantité d'eau passant à travers chacun desdits réservoirs de traitement (22) pendant un mode "en service" de chacun desdits réservoirs de traitement respectifs (22).

17. Le procédé de la revendication 16, comprenant l'étape supplémentaire consistant à ajuster ladite quantité déterminée d'eau en utilisant une valeur d'eau perdue sélectionnable qui représente une quantité d'eau perdue non-récupérable par unité de temps.

18. Le procédé de la revendication 16, comprenant l'étape supplémentaire consistant à ajuster ladite quantité déterminée d'eau en utilisant une quantité d'eau utilisée par l'un desdits réservoirs (22) pendant un mode "en service" afin de régénérer un autre ledit réservoir.

19. Le procédé de la revendication 16, comprenant l'étape supplémentaire consistant à utiliser une quantité préréglée pour régénérer au moins un desdits réservoirs de traitement (22) lorsque ladite quantité déterminée est égale à ladite quantité préréglée.

20. Le procédé de la revendication 19, comprenant l'étape supplémentaire consistant à réduire ladite quantité préréglée pour un réservoir de traitement spécifique (22) d'une quantité de chevauchement qui représente une quantité d'eau qui a passé à travers ledit réservoir de traitement spécifique (22) depuis une dernière régénération pour ledit réservoir de traitement spécifique (22) moins ladite quantité préréglée

21. Le procédé, selon l'une quelconque des revendications 14 à 20, dans lequel ladite première partie du liquide passe par un trajet d'écoulement primaire et ladite deuxième partie du liquide passe par un trajet d'écoulement secondaire.
